# EUROPEAN PATENT SPECIFICATION

(11) **EP 1 980 737 B1**
(45) Date of publication and mention of the grant of the patent: **20.01.2010**
(21) Application number: 08251360.7
(22) Date of filing: 08.04.2008
(51) Int. Cl.: F02D 41/14, B62K 11/00, F01N 13/08

(54) **Vehicle**
Fahrzeug
Véhicule

(30) Priority: 09.04.2007 JP 2007102144; 19.02.2008 JP 2008037630; 12.03.2008 JP 2008063392
(43) Date of publication of application: 15.10.2008
(73) Proprietor: Yamaha Hatsudoki Kabushiki Kaisha, Iwata-shi, Shizuoka-ken 438-8501 (JP)
(72) Inventor: Ikusue, Masato, Shizuoka-ken 438-8501 (JP); Ootsu, Toyoharu, Shizuoka-ken 438-8501 (JP); Matsuura, Shigeyuki, Shizuoka-ken 438-8501 (JP)
(74) Representative: Harris, Ian Richard

(56) References cited:
- EP-A- 0 735 258
- EP-A- 1 897 794
- JP-A- 11 343 895
- JP-A- 2000 310 116
- JP-A- 2006 112 239
- US-A- 4 553 388

## Description

### FIELD

The present invention relates to a vehicle, and more particularly relates to a vehicle having an exhaust pipe.

### BACKGROUND

Conventionally, a vehicle having an exhaust pipe has been known (see, for example, JP-A-Hei 2007-46463). The above Patent Document 1 discloses a vehicle including: four exhaust pipes, each one end of which is attached to an engine, disposed in alignment in a vehicle width direction; and an oxygen sensor (sensor), which is attached to the outmost exhaust pipe in the vehicle width direction among the four exhaust pipes, for detecting oxygen in exhaust gas discharged from the engine. In this vehicle, the oxygen sensor is disposed to project while being exposed to the outside in the vehicle width direction.

However, because the oxygen sensor (sensor section) is disposed in the outmost exhaust pipe in the vehicle width direction while being exposed to the outside, the above Patent Document 1 has a problem that it is difficult to sufficiently protect the oxygen sensor when it experiences a physical shock from the outside in the vehicle width direction.

An alternative arrangement is disclosed in EP 1 897 794 A. This document has a priority date of 11.09.2006, a publication date of 12.03.2008 and discloses a straddle-type vehicle having an oxygen sensor arranged in an exhaust pipe.

The present invention seeks to provide a vehicle which sufficiently protects a sensor section attached to an exhaust pipe.

### SUMMARY

A vehicle in one embodiment includes: a head pipe; a frame including a first downside frame and a second downside frame, both of which extend downward to the rear in a traveling direction from the head pipe; an exhaust pipe, one end of which is attached to an engine, and part of which is interposed between the first downside frame and the second downside frame; and a sensor section, which is interposed between the first downside frame and the second downside frame, for detecting exhaust gas within the exhaust pipe. The sensor section is disposed to extend to the rearward of the first downside frame.

In the vehicle according to the embodiment described above, because the sensor section for detecting the exhaust gas inside the exhaust pipe is provided in a portion of the exhaust pipe that is interposed between the first downside frame and the second downside frame, the sensor section can be interposed between the first downside frame and the second downside frame. The sensor section thus can be protected against a physical shock from both lateral sides in a vehicle width direction with the first downside frame and the second downside frame; therefore, it is possible to sufficiently protect the sensor attached to the exhaust pipe. Also, it is possible to suppress difficulty of removal work of the sensor section, which is attributable to the first downside frame, with the sensor section being disposed to extend from the exhaust pipe to the rearward of the first downside frame. Accordingly, it is possible to simplify the removal work of the sensor section.

### BRIEF DESCRIPTION OF THE DRAWINGS

An embodiment of the present invention will be hereinafter described, by way of example only, with reference to the drawings.
FIG. 1 is a side view showing the overall structure of a motorcycle according to an embodiment.
FIG. 2 is a front view showing the structure surrounding an oxygen sensor of the motorcycle according to the embodiment shown in FIG. 1.
FIG. 3 is a partially perspective view showing the structure surrounding the oxygen sensor of the motorcycle according to the embodiment shown in FIG. 1.
FIG. 4 is a partially sectional view showing the attachment structures of the oxygen sensor and a protector of the motorcycle according to the embodiment shown in FIG. 1.
FIG. 5 is a plan sectional view showing the positional relationships among the oxygen sensor, down tubes, and an exhaust pipe of the motorcycle according to the embodiment shown in FIG. 1.
FIG. 6 is a plan sectional view showing the positional relationships among the oxygen sensor, the down tubes, and the exhaust pipe of the motorcycle according to the embodiment shown in FIG. 1.
FIG. 7 is an enlarged view showing the attachment structure of the oxygen sensor with respect to the exhaust pipe of the motorcycle according to the embodiment shown in FIG. 1.
FIG. 8 is a front view showing the structure of the protector of the motorcycle according to the embodiment shown in FIG. 1.
FIG. 9 is a sectional view for describing the structure of an attachment member to which the oxygen sensor and the protector of the motorcycle are attached as a modified example.

### DETAILED DESCRIPTION

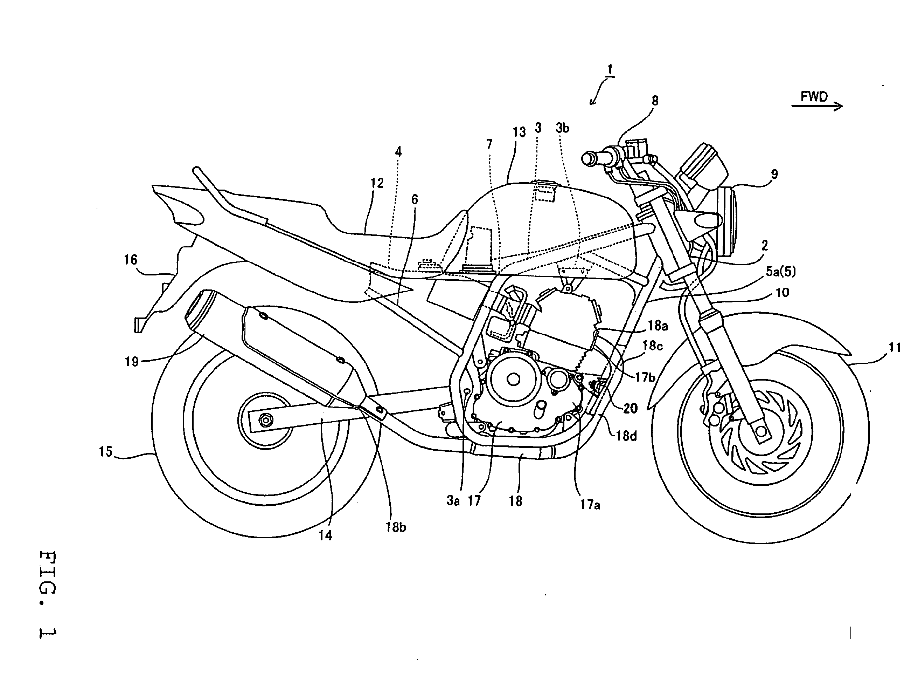

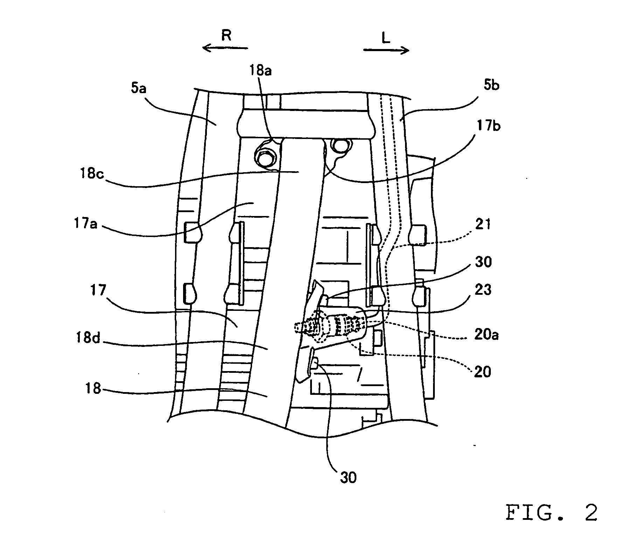

FIG. 1 is a side view showing the overall structure of a motorcycle according to an embodiment. FIGs. 2 to 8 are drawings for describing in detail an oxygen sensor and the surrounding structure of the oxygen sensor of the motorcycle according to the embodiment shown in FIG. 1. In this embodiment, the motorcycle will be described as an example of a vehicle of the present invention. The direction indicated by an arrow FWD in the drawings is a forward traveling direction of the motorcycle. Now, with reference to FIGs. 1 to 8, the structure of a motorcycle 1 according to an embodiment is described in detail.

Referring to the overall structure shown in FIG. 1, the motorcycle 1 according to the embodiment has a main frame 3 connected to a back of a head pipe 2. The main frame 3 is formed to extend downward to the rear. A seat rail 4 formed to extend upward to the rear is provided behind the main frame 3. A down tube 5, consisting of a right side down tube 5a and a left side down tube 5b (see FIG. 2), is connected to the downside of the back of the head pipe 2. A backstay 6 formed to extend upward to the rear is provided behind the main frame 3. The head pipe 2, the main frame 3, the seat rail 4, the down tube 5, and the backstay 6 constitute a body frame 7. By the way, the body frame 7 is an example of a "frame". The right side down tube 5a and the left side down tube 5b are provided to extend downward from the head pipe 2 and rearward in the traveling direction (the arrow FWD direction). The right down tube 5a is an example of a "second downside frame", and the left down tube 5b is an example of a "first downside frame".

Handlebars 8 are pivotally provided on top of the head pipe 2. A head light 9 is provided in front of the head pipe 2. A pair of front forks 10 having a suspension for absorbing the vertical shock is disposed below the head pipe 2. A front wheel 11 is rotatably attached to the bottoms of the paired front forks 10.

A seat 12 is disposed on the rear top of the seat rail 4. A fuel tank 13 is disposed in front of the seat 12 (in the arrow FWD direction). Also, a pivot shaft 3a is provided on the rear end (lower side) of the main frame 3. The pivot shaft 3a supports a front end of a rear arm 14 to be rotatable, and the rear arm 14 is swingable in the vertical direction. A rear wheel 15 is rotatably attached to the rear end of the rear arm 14. A rear fender 16 to cover the upper part of the rear wheel 15 is disposed over the rear wheel 15. An attachment 3b is provided on the upper part of the main frame 3, and an engine 17 constructed as a single cylinder engine is attached to the attachment 3b. This engine 17 has a crankcase 17a.

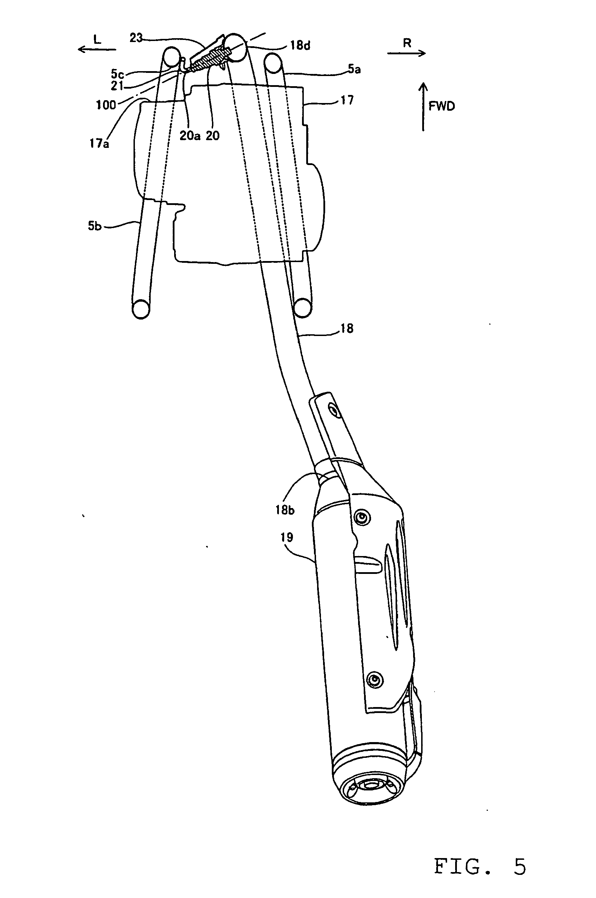

One end 18a of an exhaust pipe 18 is attached to an exhaust port 17b provided in front (the arrow FWD direction) of the upper part of the engine 17. A muffler 19 is attached to the other end 18b of the exhaust pipe 18 on the rear side. As shown in FIG. 5, the muffler 19 is located further to the right (the arrow R direction) of the right side down tube 5a, which is outside in a vehicle width direction.

In this embodiment, as shown in FIG. 1, the exhaust pipe 18 has a curved section 18c extending forward (the arrow FWD direction) from the one end 18a and curving downward, and a linear section 18d extending downward to the rear from the curved section 18c in a linear manner. As shown in FIG. 2, the one end 18a, the curved section 18c, and the linear section 18d are configured to be interposed between the right side down tube 5a and the left side down tube 5b. As shown in FIG. 1, the linear section 18d of the exhaust pipe 18 is positioned ahead (in the arrow FWD direction) of the right side down tube 5a and the left side down tube 5b. Also, the linear section 18d of the exhaust pipe 18 is disposed to extend downward to the right (the arrow R direction in FIG. 2).

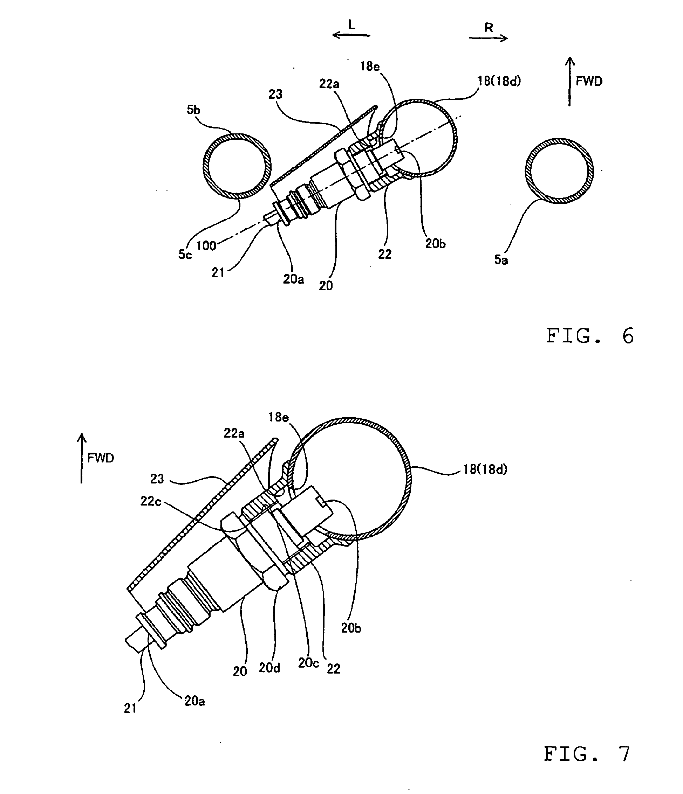

In this embodiment, as shown in FIG. 2, an oxygen sensor 20 for detecting oxygen contained in exhaust gas in the exhaust pipe 18 is attached to the linear section 18d of the exhaust pipe 18 near the curved section 18c. The oxygen sensor 20 is an example of a "sensor section ". This oxygen sensor 20 is designed to generation electricity on when a detection section 20b (see FIG. 7), which will be described later, detects oxygen contained in the exhaust gas. Voltage at the time that the oxygen sensor 20 generates electricity is transferred as an electric signal to an ECU (Engine Control Unit, not shown), and the ECU (not shown) is constituted to be able to calculate the level of oxygen contained in the exhaust gas according to the transmitted electric signal. Also, the ECU has a function to adjust the fuel injection amount in accordance with the calculated level of oxygen in the exhaust gas.

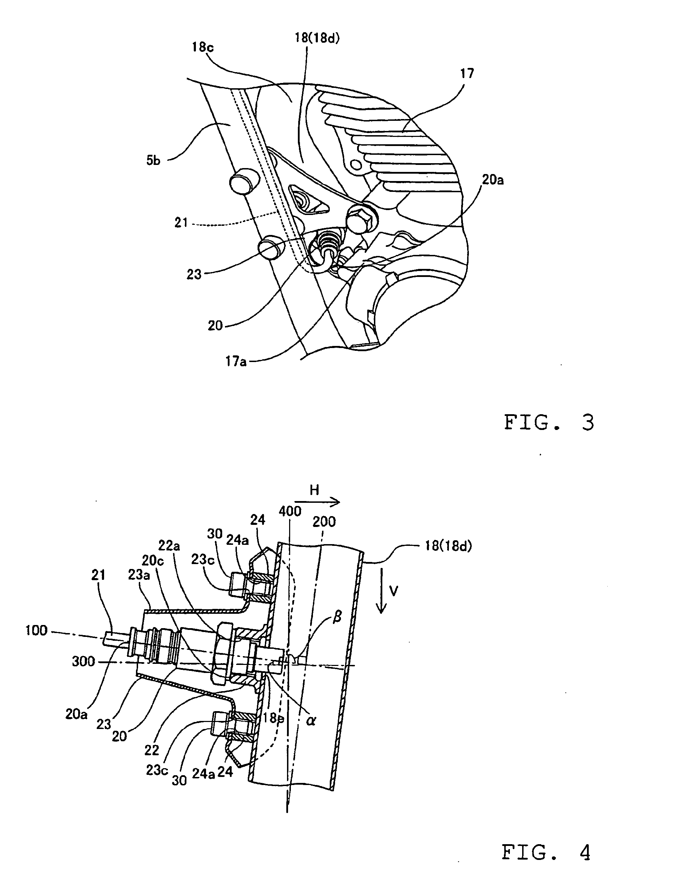

In this embodiment, as shown in FIGs. 2 and 3, a wire 21 is connected to a tip 20a on the left (the arrow L direction in FIG. 2) of the oxygen sensor 20. As shown in FIGs. 2 and 3, this wire 21 is disposed to extend upward along the rear (opposite side of the arrow FWD direction in FIG. 1) surface of the left side down tube 5b. By the way, the tip 20a is an example of "one end".

In this embodiment, as shown in Fig. 4, the exhaust pipe 18 is provided with a sensor attachment member 22 having a screw hole 22a for attaching the oxygen sensor 20. The sensor attachment member 22 is an example of an "attachment member". This sensor attachment member 22 is welded on the whole periphery of the exhaust pipe 18, and is disposed such that the screw hole 22a covers a hole 18e provided in the exhaust pipe 18. Also, two protector attachment members 24 for attaching a protector 23, which will be described later, are provided along a longitudinal direction of the linear section 18d of the exhaust pipe 18. Each of these two protector attachment members 24 has screw holes 24a. Accordingly, because the protector attachment member 24 is provided with the screw holes 24 for attaching the protector 23, it is unnecessary to provide a screw hole in the exhaust pipe 18 for attaching the protector 23. In addition, the sensor attachment member 22 is interposed between the two protector attachment members 24.

In this embodiment, as shown in FIGs. 5 and 6, the oxygen sensor 20 is disposed to extend to the rearward of the left side down tube 5b in the traveling direction (the arrow FWD direction). More specifically, an extended line of a central axis 100 of the oxygen sensor 20heading in a diagonal backward direction is positioned between the front surface of the crankcase 17a of the engine 17 and the rear surface 5c of the left side down tube 5b. Accordingly, as shown in FIG. 3, no components will be disposed on the extended line of the central axis 100 (see FIGs. 5 and 6) of the oxygen sensor 20. As shown in FIG. 6, the tip 20a of the oxygen sensor 20 is placed rearward the rear surface 5c of the left side down tube 5b.

In this embodiment, as shown in FIG. 7, the oxygen sensor 20 has the detection section 20b protruding from the hole 18e toward the center of the exhaust pipe 18, a screw 20c fixed by being screwed to the screw hole 22a of the sensor attachment member 22, and a hexagonal section 20d for attaching the oxygen sensor 20 to the exhaust pipe 18 with a given tool. Also, the oxygen sensor 20 is attached to the exhaust pipe 18 with the screw 20c being screwed to the screw hole 22a of the sensor attachment member 22.

In addition, in this embodiment, as shown in FIG. 4, the oxygen sensor 20 is attached such that the central axis 100 crosses a central axis 200 of the linear section 18d of the exhaust pipe 18 at right angles. In other words, the oxygen sensor 20 is provided to cross the linear section 18d, the lower part of which is inclined to the right (the arrow R direction in FIG. 2), at right angles. Therefore, the central axis 100 of the oxygen sensor 20 is tilted at a first angle α in the upward direction to a horizontal (the arrow H direction) line 300. Accordingly, the central axis 100 of the oxygen sensor 20 is constituted to have a second angle β (α + 90°) to a vertical (the arrow V direction) line 400; therefore, it is possible to constitute that a water droplet falling down in the vertical direction (the arrow V direction) does not directly hit the detection section 20b.

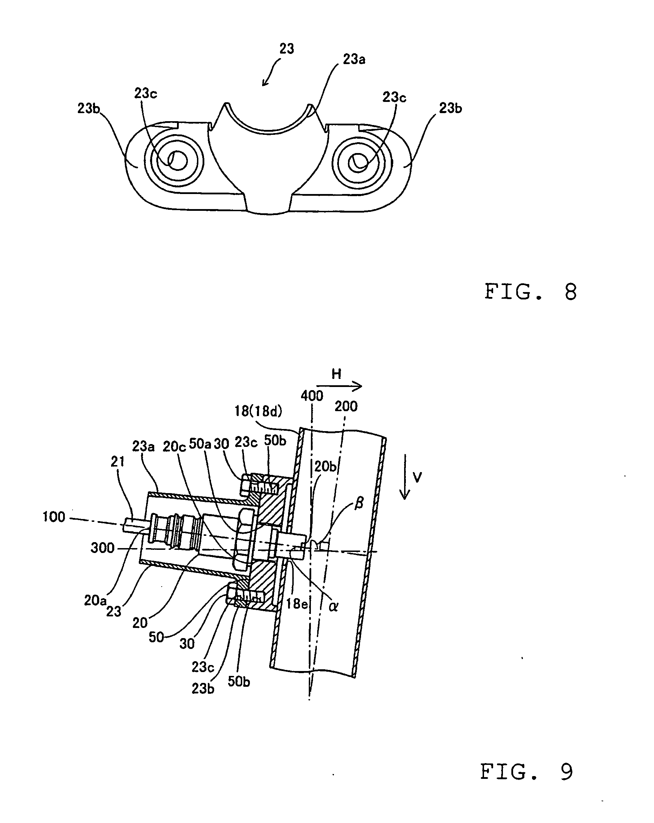

The protector 23 that is provided to cover the front side of the oxygen sensor 20 is attached to the protector attachment member 24. By the way, the protector 23 is an example of a "protective member". As shown in FIG. 8, this protector 23 has a protective section 23a for protecting the front side of the oxygen sensor 20 (see FIG. 2), and a flat attachment 23b for attaching the protector 23 to the exhaust pipe 18 (see FIG. 2). The protective section 23a has a cross section in a semicircle shape for covering the front side of the oxygen sensor 20 (see FIG. 2), and is formed to protrude from the attachment 23b in a direction that the oxygen sensor 20 extends (see FIG. 2). In addition, the attachment 23b is provided with screw insertion holes 23c near each end. A screw 30 is inserted in each of the screw insertion holes 23c (see FIG. 4), and is screwed to each screw hole 24a provided in the protector attachment member 24.

In this embodiment, as described above, the oxygen sensor 20 for detecting oxygen inside the exhaust pipe 18 is provided in a portion of the exhaust pipe 18 that is interposed between the left side down tube 5b and the right side down tube 5a. Therefore, it is possible to interpose the oxygen sensor 20 between the left side down tube 5b and the right side down tube 5a. Accordingly, because it is possible to protect the oxygen sensor 20 at both lateral sides in the vehicle width direction (the right and left direction) with the left side down tube 5b and the right side down tube 5a, it is possible to protect the oxygen sensor 20 against a physical shock from the outside in the vehicle width direction. As a result, the oxygen sensor 20 can be sufficiently protected. Also, because the oxygen sensor 20 is disposed to extend from the exhaust pipe 18 to the rearward of the left side down tube 5b, it is possible to suppress the difficulty in removal work of the oxygen sensor 20, which is attributable to the left side down tube 5b. Accordingly, it can simplify the removal work of the oxygen sensor 20.

In this embodiment, as described above, because the linear section 18d in a straight line shape disposed in front of the engine 17 is provided in the exhaust pipe 18, and the oxygen sensor 20 is attached to the linear section 18d of the exhaust pipe 18, it is possible to attach the oxygen sensor 20 to the exhaust pipe 18 in a stable condition compared to a case in which the oxygen sensor 20 is attached to a curved section of the exhaust pipe 18.

Also, in this embodiment, as described above, the oxygen sensor 20 can be attached to the position in the exhaust pipe 18 that is close to the engine 17 by providing the curved section 18c between the one end 18a attached to the engine 17 and the linear section 18d, and by attaching the oxygen sensor 20 to the linear section 18d of the exhaust pipe 18, which is close to the curved section 18c. Accordingly, because it is possible for the oxygen sensor 20 to detect oxygen contained in the exhaust gas exhausted from the engine 17 in the position close to the engine 17, the level of oxygen contained in the exhaust gas exhausted from the engine 17 can be accurately detected.

In this embodiment, as described above, the wire 21 is easily disposed in an upward direction by connecting the wire 21 to the tip 20a of the oxygen sensor 20 and by disposing the wire 21 to extend upward along the left side down tube 5b.

Also, in this embodiment, as described above, because the oxygen sensor 20 is disposed in such a manner that the external line of the central axis 100 of the oxygen sensor 20 is positioned between the crankcase 17a of the engine 17 and the left side down tube 5b, the left side down tube 5b and the crankcase 17a do not interfere when the oxygen sensor 20 is removed from the exhaust pipe 18. In addition, the interference of the left side down tube 5b and the crankcase 17a can also be avoided when the oxygen sensor 20 is attached to the exhaust pipe 18. Thereby, it is possible to simplify the attachment/removal work of the oxygen sensor 20 to/from the exhaust pipe 18.

In this embodiment, as described above, the wire 21 connected to the tip 20a of the oxygen sensor 20 can be easily disposed along the left side down tube 5b by disposing the tip 20a of the oxygen sensor 20 behind the rear surface of the left side down tube 5b in the traveling direction (the arrow FWD direction), and by disposing the tip 20a between the left side down tube 5b and the exhaust pipe 18.

In this embodiment, as described above, because the oxygen sensor 20 is attached in such a manner that the extended line of the central axis 100 of the oxygen sensor 20 is tilted upward with respect to the horizontal direction, it is possible to suppress the direct contact of water droplet in the exhaust pipe 18 with the detection section 20b of the oxygen sensor 20.

Also, in this embodiment, as described above, providing the protector 23 for covering the foreside of the oxygen sensor 20 in the traveling direction can suppress the direct collision of a pebble and the like coming from ahead with the oxygen sensor 20 while the vehicle is traveling forward.

In this embodiment, as described above, because the linear section 18d of the exhaust pipe 18 is disposed ahead of the left downside tube 5b and the right downside tube 5a in the traveling direction, and the protector 23 is attached to the linear section 18d of the exhaust pipe 18, the protector 23 can be disposed in the proximity of the oxygen sensor 20. The protector thus can protect the foreside of the oxygen sensor 20 in the position closer to the oxygen sensor 20.

In this embodiment, as described above, the protector 23 is provided with the attachment 23b having the screw insertion holes 23c, and is attached to the linear section 18d of the exhaust pipe 18 by the screw 30 via the attachment 23b and the protector attachment member 24. Therefore, the protector 23 can be easily attached to the exhaust pipe 18.

In this embodiment, as described above, the oxygen sensor 20 can be easily attached to the exhaust pipe 18 via the sensor attachment member 22 by screwing the screw 20c to the screw hole 22a of the sensor attachment member 22. Also, providing the screw hole 22a in the sensor attachment member 22 eliminates the need to provide a screw hole on the exhaust pipe 18, and thus, it is possible to prevent the structure of the exhaust pipe 18 from getting complicated.

It should be understood that the embodiment disclosed herein is given as a mere illustration in all respects, but not given to impose any limitation. The scope of the present invention is defined by the scope of the claims rather than by the descriptions of the embodiment, and includes all modifications falling within the scope of the claims and equivalents thereof.

For example, the above embodiment uses a motorcycle as an example of the vehicle. However, the present invention is not limited thereto, but is also applicable to other types of vehicles such as a three-wheeler and an ATV (All Terrain Vehicle) as long as the vehicle is provided with an engine, an exhaust pipe, and a sensor.

Also, the above embodiment uses an oxygen sensor as an example of the sensor. However, the present invention is not limited thereto, but is also applicable to other types of sensors other than the oxygen sensor for detecting exhaust gas, such as a sensor for detecting components of the exhaust gas, a temperature sensor for detecting temperature of the exhaust gas, and a pressure sensor for detecting pressure of the exhaust gas.

In addition, the above embodiment illustrates an example that an oxygen sensor (sensor section) is provided in the linear section of an exhaust pipe. However, the present invention is not limited to that, but may be provided with an additional oxygen sensor in the exhaust pipe near a muffler or the like. In this case, it is possible to detect the more accurate level of oxygen contained in the exhaust gas by comparing the results of the oxygen levels detected by the two oxygen sensors.

Moreover, the above embodiment illustrates an example that the oxygen sensor (sensor section) is attached to the exhaust pipe so as to extend to the rear of a left side frame from the exhaust pipe. However, the present invention is not limited to that, but the oxygen sensor may be attached to the exhaust pipe so as to extend to the rear of a right side frame.

Furthermore, the above embodiment illustrates an example that a sensor attachment member for attaching the oxygen sensor and a protector attachment member for attaching a protector are separately provided to the exhaust pipe. However, the present invention is not limited to that, but the sensor attachment member and the protector attachment member may be provided in one. For example, as shown as an modification example in FIG. 9, the exhaust pipe 18 may be provided with an attachment member 50 having a screw hole 50a for attaching the oxygen sensor 20 and the protector 23, and screw holes 50b for attaching the protector 23.

### DESCRIPTION OF REFERENCE NUMERALS AND SYMBOLS

1: motorcycle (vehicle)
2: head pipe
5a:right side down tube (second downside frame)
5b:left side down tube (first downside frame)
7: body frame (frame)
17: engine
17a:crankcase
18: exhaust pipe
18a:one end
18b:the other end
18c:curved section
18d:linear section
19: muffler
20: oxygen sensor (sensor section)
20a:tip (one end)
21: wire (wire member)
22: sensor attachment member (attachment member)
22a:screw hole
23: protector (protective member)
23b:attachment
23c:screw insertion hole
30: screw (screw member)
50: attachment member
100: central axis

## Claims

1. A vehicle (1) comprising:
an engine (17);
a head pipe (2) ;
a frame (7) including a first downside frame (5b) and a second downside frame (5a), both of which extend downward to the rear in a traveling direction from the head pipe;
an exhaust pipe (18), one end of which is attached to the engine (17), and part of which is interposed between the first downside frame and the second downside frame and includes a linear section disposed in front of the engine and formed to extend linearly; and
a sensor section (20), which is attached to the linear section of the exhaust pipe between the first downside frame and the second downside frame, for detecting exhaust gas inside the exhaust pipe,
wherein the sensor section is disposed to extend from the exhaust pipe to the rear of the first downside frame.

2. The vehicle according to Claim 1, wherein
the exhaust pipe further includes a curved section interposed between one end attached to the engine and the linear section, and
the sensor section is attached to the linear section of the exhaust pipe near the curved section.

3. The vehicle according to any preceding Claim, further comprising:
a wire member connected to the end of the sensor section,
wherein the wire member is disposed to extend upward along the first downside frame.

4. The vehicle according to any preceding Claim, wherein
the engine includes a crankcase, and
the sensor section is disposed such that an extended line of a central axis of the sensor section is positioned between the crankcase and the first downside frame.

5. The vehicle according to Claim 4, wherein
the end of the sensor section is disposed behind a rear surface of the first downside frame in the traveling direction, and is interposed between the first downside frame and the exhaust pipe.

6. The vehicle according to any preceding Claim, further comprising:
a muffler connected to the other end of the exhaust pipe and disposed outside the second downside frame in a vehicle width direction,
wherein the sensor section is attached to extend in a direction toward the first downside frame.

7. The vehicle according to any preceding Claim, wherein
the sensor section is attached in such a manner that the central axis of the sensor section is tilted in an upward direction.

8. The vehicle according to any preceding Claim, further comprising
a protective member provided to cover a front side of the sensor section in the traveling direction of the vehicle.

9. The vehicle according to Claim 8, wherein
the exhaust pipe includes the linear section in a straight line shape in front of the engine,
the linear section of the exhaust pipe is disposed ahead of the first downside frame and the second downside frame, and
the protective member is attached to the linear section of the exhaust pipe.

10. The vehicle according to Claim 9, wherein
the protective member includes an attachment having a screw insertion hole, and is attached to the linear section of the exhaust pipe with a screw member via the attachment.

11. The vehicle according to any one of the preceding claims, wherein
the sensor section includes a screw,
the linear section of the exhaust pipe has an attachment member having a screw hole, and
the sensor section is attached to the exhaust pipe with the screw being screwed to the screw hole of the attachment member.

12. The vehicle according to any preceding Claim, wherein
the sensor section is an oxygen sensor for detecting oxygen contained in exhaust gas in the exhaust pipe.

## Patentansprüche

1. Fahrzeug (1) mit:
einem Motor (17);
einem Steuerkopfrohr (2);
einem Rahmen (7) inklusive einem ersten unteren Rahmen (5b) und einem zweiten unteren Rahmen (5a), die sich beide abwärts, in Fahrrichtung von dem Steuerkopf nach hinten erstrecken;
einem Auspuffrohr (18), dessen eines Ende an dem Motor befestigt ist, und dessen eines Teil zwischen dem ersten unteren Rahmen und dem zweiten unteren Rahmen eingeschoben ist und einen linearen Abschnitt beinhaltet, der vor dem Motor angeordnet und sich geradlinig erstreckend geformt ist; und
einem Sensorabschnitt (20), der an dem linearen Abschnitt des Auspuffrohres, zwischen dem ersten unteren Rahmen und dem zweiten unteren Rahmen zur Detektierung von Auspuffgas im Inneren des Auspuffrohrs angebracht ist,
wobei der Sensorabschnitt derart angeordnet ist, dass er sich von dem Auspuffrohr zu dem hinteren Teil des ersten unteren Rahmens erstreckt.

2. Fahrzeug nach Anspruch 1, wobei
das Auspuffrohr ferner einen gekrümmten Abschnitt aufweist, der zwischen dem an dem Motor angebrachten einen Ende und dem linearen Abschnitt eingefügt ist, und der Sensorabschnitt an dem linearen Abschnitt des Auspuffrohrs in der Nähe des gekrümmten Abschnitts angebracht ist.

3. Fahrzeug nach einem vorangehenden Anspruch, das ferner aufweist:
ein mit dem Ende des Sensorabschnittes verbundenes Kabelelement, das dafür ausgelegt ist, sich aufwärts entlang des ersten unteren Rahmens zu erstrecken.

4. Fahrzeug nach einem vorangehenden Anspruch, wobei der Motor ein Kabelgehäuse aufweist und der Sensorabschnitt so angeordnet ist, dass eine Verlängerungslinie der Mittelachse des Sensorabschnitts zwischen dem Kabelgehäuse und dem ersten unteren Rahmen positioniert ist.

5. Fahrzeug nach Anspruch 4, wobei das Ende des Sensorabschnitts in Fahrtrichtung hinter einer Rückseite des ersten unteren Rahmens angeordnet ist und zwischen dem ersten unteren Rahmen und dem Auspuffrohr eingefügt ist.

6. Fahrzeug nach einem vorangehenden Anspruch, ferner mit:
einem Auspufftopf, der mit dem anderen Ende des Auspuffrohrs verbunden und außerhalb des zweiten unteren Rahmens in einer Richtung der Fahrzeugbreite angeordnet ist;
wobei der Sensorabschnitt so angebracht ist, dass er sich in einer Richtung zu dem ersten unteren Rahmen hin erstreckt.

7. Fahrzeug nach einem vorangehenden Anspruch, wobei der Sensorabschnitt derart angebracht ist, dass die Mittelachse des Sensorabschnitts in einer Aufwärtsrichtung geneigt ist.

8. Fahrzeug nach einem vorangehenden Anspruch, das weiter aufweist:
ein Schutzelement, das zum Abdecken einer Vorderseite des Sensorabschnitts in Fahrtrichtung des Fahrzeuges vorgesehen ist.

9. Fahrzeug nach Anspruch 8, wobei
das Auspuffrohr den linearen Abschnitt in einer geradlinigen Form vor dem Motor aufweist,
der lineare Abschnitt des Auspuffrohrs vor dem ersten unteren Rahmen und dem zweiten unteren Rahmen angeordnet ist,
und das Schutzelement an dem linearen Abschnitt des Auspuffrohrs angebracht ist.

10. Fahrzeug nach Anspruch 9, wobei
das Schutzelement ein Anbauteil mit einem Schraubeneinführloch aufweist und an dem linearen Abschnitt des Auspuffrohrs über das Anbauteil mit einem Schraubelement angebracht ist.

11. Fahrzeug nach einem der vorangehenden Ansprüche, wobei
der Sensorabschnitt eine Schraube aufweist,
der lineare Abschnitt des Auspuffrohrs ein Anbauelement mit einem Schraubenloch hat, und
der Sensorabschnitt an dem Auspuffrohr befestigt ist, wobei die Schraube mit dem Schraubenloch des Anbauelements verschraubt ist.

12. Fahrzeug nach einem vorangehenden Anspruch, wobei
der Sensorabschnitt ein Sauerstoffsensor ist zum Detektieren von in einem Abgas in dem Auspuffrohr enthaltenen Sauerstoff.

## Revendications

1. Véhicule (1) comprenant :
un moteur (17) ;
une tubulure frontale (2) ;
un châssis (7) englobant un premier cadre descendant (5b) et un second cadre descendant (5a) s'étendant, l'un et l'autre, vers le bas et vers l'arrière dans une direction de déplacement, à partir de ladite tubulure frontale ;
un tuyau d'échappement (18) dont l'une des extrémités est raccordée au moteur (17) et dont une partie est interposée entre le premier cadre descendant et le second cadre descendant, et présente un tronçon rectiligne placé devant le moteur et offrant un tracé en ligne droite ; et
une zone de détection (20) reliée au tronçon rectiligne du tuyau d'échappement, entre le premier cadre descendant et le second cadre descendant, en vue de détecter des gaz d'échappement à l'intérieur dudit tuyau d'échappement,
ladite zone de détection étant agencée de manière à s'étendre depuis le tuyau d'échappement jusqu'à l'arrière du premier cadre descendant.

2. Véhicule selon la revendication 1, dans lequel
le tuyau d'échappement présente, en outre, un tronçon curviligne interposé entre le tronçon rectiligne et l'une des extrémités, reliée au moteur, et
la zone de détection est reliée audit tronçon rectiligne du tuyau d'échappement, à proximité dudit tronçon curviligne.

3. Véhicule selon une quelconque revendication précédente, comprenant par ailleurs :
un élément de type câble, connecté à l'extrémité de la zone de détection,
sachant que ledit élément de type câble est agencé pour s'étendre vers le haut, le long du premier cadre descendant.

4. Véhicule selon une quelconque revendication précédente, dans lequel
le moteur comporte un carter de vilebrequin, et
la zone de détection est agencée de manière qu'une ligne de prolongement d'un axe médian de ladite zone de détection soit interposée entre ledit carter de vilebrequin et le premier cadre descendant.

5. Véhicule selon la revendication 4, dans lequel
l'extrémité de la zone de détection est placée derrière une surface postérieure du premier cadre descendant, dans la direction du déplacement, et est interposée entre ledit premier cadre descendant et le tuyau d'échappement.

6. Véhicule selon une quelconque revendication précédente, comprenant par ailleurs :
un silenceur relié à l'autre extrémité du tuyau d'échappement et situé à l'extérieur du second cadre descendant, dans le sens de la largeur du véhicule,
sachant que la zone de détection est reliée de manière à s'étendre en direction du premier cadre descendant.

7. Véhicule selon une quelconque revendication précédente, dans lequel
la zone de détection est reliée de manière que l'axe médian de ladite zone de détection soit basculé vers le haut.

8. Véhicule selon une quelconque revendication précédente, comprenant par ailleurs
une pièce de protection prévue pour recouvrir un côté frontal de la zone de détection dans la direction du déplacement dudit véhicule.

9. Véhicule selon la revendication 8, dans lequel
le tuyau d'échappement présente le tronçon rectiligne offrant une configuration en ligne droite devant le moteur,
ledit tronçon rectiligne du tuyau d'échappement est disposé en avant du premier cadre descendant et du second cadre descendant, et
la pièce de protection est reliée audit tronçon rectiligne dudit tuyau d'échappement.

10. Véhicule selon la revendication 9, dans lequel
la pièce de protection présente un système de liaison muni d'un trou d'insertion d'une vis, et est rattachée au tronçon rectiligne du tuyau d'échappement à l'aide d'un organe vissable, par l'intermédiaire dudit système de liaison.

11. Véhicule selon l'une quelconque des revendications précédentes, dans lequel
la zone de détection comporte une vis,
le tronçon rectiligne du tuyau d'échappement présente une pièce de rattachement dotée d'un trou de vissage, et
ladite zone de détection est reliée audit tuyau d'échappement par vissage de ladite vis dans ledit trou de vissage de ladite pièce de rattachement.

12. Véhicule selon une quelconque revendication précédente, dans lequel
la zone de détection est un capteur d'oxygène, conçu pour détecter de l'oxygène renfermé par des gaz d'échappement situés dans le tuyau d'échappement.
